Europäisches Patentamt

European Patent Office

Office européen des brevets

(19)

(11) Veröffentlichungsnummer: **0 113 066**
**A1**

(12) # EUROPÄISCHE PATENTANMELDUNG

(21) Anmeldenummer: **83112136.3**

(22) Anmeldetag: **02.12.83**

(51) Int. Cl.³: **C 08 F 279/02**
**//(C08F279/02, 212/06)**

(30) Priorität: **08.12.82 DE 3245367**

(43) Veröffentlichungstag der Anmeldung:
**11.07.84 Patentblatt 84/28**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Hoenl, Hans, Dr.**
**Hauptstrasse 69 a**
**D-6719 Obersulzen(DE)**

(54) Verfahren zur Herstellung von schlagfesten Polymerisaten von Vinylaromaten.

(57) Die Erfindung betrifft ein Verfahren zur Herstellung von schlagfesten Polymerisaten von Vinylaromaten durch kontinuierliche Polymerisation eines Reaktionsansatzes der 2 bis 12 Gew.%, bezogen auf den Ansatz, Polybutadien als Kautschuk in einem vinylaromatischen Monomeren gelöst enthält, in einer Kaskade aus 2 Rührkesseln und 2 Turmreaktoren, wobei die Polymerisation in den beiden Rührkesseln unter an sich bekannten Scherbedingungen innerhalb des genannten Temperaturbereiches isotherm durchgeführt wird,

und die Polymerisation in den Turmreaktoren jeweils isotherm oder mit ansteigendem Temperaturprofil bis zu Endumsätzen von 60 bis 90 Gew.%, erfolgt,

unter anschließender Abtrennung des Wertproduktes und unter üblicher Entfernung von nicht umgesetzten Monomeren und gegebenenfalls von Lösungsmitteln, wobei man die Polymerisation in Gegenwart von pfropfaktiven peroxidischen Initiatoren durchführt und Durchsätze von weniger als 9 %, bezogen auf das Gesamtvolumen der Kaskade/Stunde, einstellt.

EP 0 113 066 A1

## Verfahren zur Herstellung von schlagfesten Polymerisaten von Vinylaromaten

Die Erfindung betrifft ein Verfahren zur Herstellung von schlagfesten Polymerisaten von Vinylaromaten durch kontinuierliche Polymerisation eines Reaktionsansatzes, der Polybutadien als Kautschuk in mindestens einem vinylaromatischen Monomeren gelöst enthält, in einer Kaskade aus 2 Rührkesseln und 2 Turmreaktoren bei Temperaturen von 50 bis 160°C.

Transluzenz ist z.B. im Verpackungssektor gefragt. Bekanntermaßen ist herkömmliches schlagfestes Polystyrol lichtundurchlässig. Wird die Weichkomponente Polybutadien durch einen Styrol-Butadien-Blockkautschuk ersetzt, so erhält man ein transluzentes, schlagfestes Material. Die großen lichtstreuenden Zellenteilchen der Polybutadien-Phase werden durch die kleineren Kapselteilchen der Blockkautschuk-Phase ersetzt.

Nachteilig bei diesem Stoffaustausch ist der im Vergleich zum Polybutadien höhere Preis des Blockkautschuks sowie die Abhängigkeit von einer bestimmten Spezifikation des selben.

Es bestand daher die Aufgabe, transluzentes schlagfestes Polystyrol auf der Basis von Polybutadien als Weichkomponente herzustellen, wobei für eine Herstellung in größerem Maßstab nur ein kontinuierliches Verfahren in Frage kommt.

Zum Stand der Technik nennen wir:

(1)  DE-AS 17 70 392 und
(2)  DE-AS 26 13 352.

In (1) ist ein kontinuierliches Verfahren zur Herstellung von schlagfesten kautschukhaltigen Polymerisaten beschrieben, das in Rührkessel--Turmkaskade thermisch durchgeführt wird.

In (2) ist ein zweistufiges diskontinuierliches Verfahren zur Herstellung von schlagfesten Styrolpolymerisaten beschrieben, das thermisch oder radikalisch durchgeführt werden kann. Bei diesem Verfahren können bei Verwendung von Blockcopolymerisaten als auch bei Verwendung von Polybutadien als Kautschuk schlagfeste und gleichzeitig transluzente Produkte erhalten werden.

Vo/Kl

Es hat sich nun gezeigt, daß die kontinuierliche radikalische Polymerisation in Gegenwart von Blockkautschuken in dem (1) bekannten diskontinuierlichen Verfahren auch zu transluzenten Produkten führt. Die Herstellung von transluzenten Produkten, ausgehend von Polybutadien als Kautschuk, führte jedoch nicht ohne weiteres zu transluzenten Produkten, wenn das in (1) beschriebene Verfahren angewendet wird, da sich nicht die für die Eigenschaft Transluzenz erforderliche Teilchenmorphologie einstellen läßt.

Es bestand daher die Aufgabe, Polybutadien als Kautschuk in einem kontinuierlichen Verfahren, das radikalisch gestartet wird, zu transluzenten schlagfesten Produkten zu verarbeiten.

Die Aufgabe wird gelöst durch ein Verfahren gemäß Patentanspruch 1.

Die Erfindung betrifft somit ein Verfahren zur Herstellung von schlagfesten Polymerisaten von Vinylaromaten durch kontinuierliche Polymerisation eines Reaktionsansatzes, der 2 bis 12 Gew.%, bezogen auf den Ansatz, mindestens eines Polybutadiens als Kautschuk, in mindestens einem vinylaromatischen Monomeren gelöst, enthält, und der zusätzlich gegebenenfalls ein indifferentes Lösungsmittel, sowie gegebenenfalls mindestens ein Hilfsmittel aufweist, in einer Kaskade aus 2 Rührkesseln $R_1$ und $R_2$ und 2 Turmreaktoren $T_1$ und $T_2$, bei Temperaturen von 50 bis 160°C, wobei die Polymerisation in den beiden Rührkesseln $R_1$ und $R_2$ unter an sich bekannten Scherbedingungen innerhalb des genannten Temperaturbereichs isotherm durchgeführt wird und die Polymerisation in den Turmreaktoren $T_1$ und $T_2$ jeweils isotherm oder mit ansteigendem Temperaturprofil bis zu Endumsätzen von 60 bis 90 Gew.%, in $T_2$, erfolgt, unter anschließender Abtrennung des Wertproduktes und unter üblicher Entfernung von nicht umgesetzten Monomeren und gegebenenfalls des Lösungsmittels. Das Verfahren ist dadurch gekennzeichnet, daß man die Polymerisation in Gegenwart von an sich bekannten pfropfaktiven peroxidischen Initiatoren durchführt und Durchsätze von weniger als 9 %, bezogen auf das Gesamtvolumen der Kaskade/Stunde einstellt.

Nachstehend werden das erfindungsgemäße Verfahren und die für seine Durchführung erforderlichen Ausgangsstoffe sowie Hilfsmittel beschrieben.

Als Vinylaromaten zur Durchführung des erfindungsgemäßen Verfahrens kommen Styrol, α-Methylstyrol, p-Methylstyrol oder Mischungen der vorgenannten Monomeren in Frage.

BASF Aktiengesellschaft — 3 — 0113066

Unter Reaktionsansatz im Sinne des erfindungsgemäßen Verfahrens wird die Summe aus dem oder den vinylaromatischen Monomeren, dem Kautschuk, dem gegebenenfalls verwendeten Lösungsmittel und den gegebenenfalls verwendeten weiteren Hilfsmitteln, wie Mineralöl, verstanden.

Als Kautschuke zur Durchführung des erfindungsgemäßen Verfahrens können alle 1,4-Polybutadiene mit einem Anteil in cis-Konfiguration von mehr als 25 % verwendet werden. Der Kautschuk wird in einer Menge von 2 bis 12, insbesondere in einer Menge von 5 bis 10 Gew.%, jeweils bezogen auf den Reaktionsansatz, eingesetzt.

Als Lösungsmittel können verwendet werden Toluol, Xylol und Ethylbenzol; letzteres wird vorzugsweise angewendet. Die Lösungsmittel werden in Mengen von 2 bis 10 Gew.%, insbesondere von 4 bis 6 Gew.%, jeweils bezogen auf den Reaktionsansatz, d.h. auf die Gesamtmischung aus vinylaromatischen Monomeren plus Kautschuk plus Lösungsmittel plus Hilfsmittel angewendet. Das Lösungsmittel kann im erfindungsgemäßen Verfahren gegebenenfalls anwesend sein, es wird vorzugsweise jedoch angewendet.

Der Reaktionsansatz kann gegebenenfalls Hilfsmittel enthalten, als solche seien genannt Mineralöle, übliche Molekulargewichtsregler, d.h. Mercaptane mit 6 bis 40 C-Atomen sowie die gebräuchlichen Antioxidantien auf Basis sterisch gehinderter Phenole. Diese Hilfsmittel, insbesondere die Mineralöle, werden dem Reaktionsansatz von Anfang an, d.h. bereits bei der Mischung des Reaktionsansatzes zugegeben. Sie können jedoch auch zu einem späteren Zeitpunkt dem Polymerisationsansatz zugegeben werden bzw. erst vor Durchführung der Konfektionierung eingebracht werden.

Ferner seien als Hilfsmittel genannt Gleitmittel, wie Zinkstearat und andere Stearate bzw. andere übliche Gleitmittel. Da die genannten Kautschuke gelegentlich basische Reste enthalten, werden dem Reaktionsansatz kleinere Mengen an Acrylsäure zur Neutralisation zugegeben.

Wesentlich für die Durchführung des erfindungsgemäßen Verfahrens ist die Verwendung der vorstehend genannten Kautschuke auf Basis von Polybutadien in einem kontinuierlichen Verfahren, das in Anwesenheit eines Initiators gestartet wird und das in einer Rührkessel-Turmkaskade, die aus zwei Rührkesseln und zwei Türmen aufgebaut ist, abläuft. Zur Durchmischung bzw. Homogenisierung des Reaktionsansatzes kann die vorstehend genannte – und insbesondere in der Druckschrift (1) beschriebene – Kaskade mit einem verhältnismäßig kleinvolumigen Vormischer ausgerüstet sein, der gegebenenfalls einen Rührer oder andere Mischorgane enthält. In diesem Vormischer wird die Lösung des Kautschuks und der weiteren Hilfsmittel in dem vinylaromatischen Monomeren und dem Lösungsmittel mit der Lösung der Starter gemischt und dann in den ersten Rührkessel eingebracht.

Im ersten Rührkessel $R_1$ wird eine Temperatur im Bereich von 70 bis 110°C, vorzugsweise eine solche im Bereich von 75 bis 98°C eingestellt. Wesentlich für den Erfolg des erfindungsgemäßen Verfahrens ist, daß die Durchsätze weniger als 9 % des Gesamtvolumens der Kaskade/Stunde betragen. Die Durchsätze betragen insbesondere 2,0 bis 8,7, vorzugsweise 5,0 bis 8,5 % des Kaskadenvolumens/Stunde. Bei der Berechnung des Gesamtvolumens der Kaskade ist der jeweilige Füllgrad der Rührkessel $R_1$ und $R_2$ sowie der Turmreaktoren $T_1$ und $T_2$ zu berücksichtigen. Wird ein Vormischer verwendet, so ist dessen Inhalt hinzuzurechnen. Wenn dieser Bereich eingestellt wird, werden Endprodukte erhalten, die überwiegend eine Kapselteilchenmorphologie aufweisen, d.h. kleine Teilchen im Größenbereich unter 0,5μ. Daneben findet sich, ein geringer Anteil an Zellenteilchen kleinerer Art. Im ersten Rührkessel ist eine Scherung erforderlich, deren Art und Größe dem Fachmann an sich bekannt ist; zur Erzielung des Erfolges ist in der vom Fachmann gewählten Apparatur diese Scherwirkung anhand einiger orientierender Versuche festzulegen.

Der zweite Rührkessel, $R_2$, wird bei Temperaturen von 65 bis 110°C, insbesondere bei solchen von 80 bis 95°C betrieben. In diesem zweiten Rührkessel werden Umsätze (in Gew.%) von 17 bis 45 %, insbesondere von 20 bis 30 % eingestellt. Auch der zweite Rührkessel wird unter an sich bekannten Scherbedingungen betrieben. Die Rührkessel $R_1$ und $R_2$ werden jeweils isotherm, d.h. bei einer vorgewählten konstanten Temperatur, betrieben. Das Reaktionsprodukt gelangt anschließend in eine weitere Teilkaskade, die aus 2 Türmen besteht, die in an sich bekannter Weise unter schwachem Rühren bzw. sehr geringem Scheren betrieben werden. Die Temperatur im Turm $T_1$ kann im Bereich von 100 bis 140, insbesondere im Bereich von 105 bis 125°C, gewählt werden. Im ersten Turm wird der Umsatz auf 30 bis 60, vorzugsweise 45 bis 55 Gew.% eingestellt. Im anschließenden Turm $T_2$ werden die Temperaturen im Bereich von 120 bis 145°C, insbesondere im Bereich von 135 bis 150°C gewählt, dabei werden die Endumsätze im Turm $T_2$ in dem Bereich von 60 bis 90, vorzugsweise im Bereich von 75 bis 85 Gew.% eingestellt. Die Polymerisation kann in beiden Türmen entweder isotherm, oder aber mit ansteigendem Temperaturprofil durchgeführt werden. Alle vorstehend genannten Temperaturbereiche beziehen sich auf eine kleine halbtechnische Anlage mit einem Gesamtvolumen im Bereich, z.B. von 5 bis 40 Liter. Die zu wählenden Temperaturen und Umsätze können vom Fachmann bei einer Übertragung auf eine technische oder andere Anlage aufgrund einiger orientierender Versuche nach an sich bekannten Kriterien festgelegt werden.

Das den Turm $T_2$ verlassende Reaktionsprodukt wird anschließend im Temperaturbereich von 200 bis 260°C bei 10 bis 50 Torr entgast. Bei dieser Entgasung im Vakuum wird das gegebenenfalls angewendete Lösungsmittel und das nicht umgesetzte vinylaromatische Monomere abgezogen. Anschließend wird das so entgaste Produkt durch Extrusion unter weiterer Entgasung bis auf Restgehalte von 0,2 bis 0,5 Gew.% Styrol und Lösungsmittel granuliert.

Zur Durchführung des erfindungsgemäßen Verfahrens werden an sich bekannte pfropfaktive Starter auf Basis von Peroxiden verwendet. Sie werden in Mengen von 0,02 bis 0,3 Gew.%, bezogen auf den Reaktionsansatz, eingesetzt. Als zu verwendende Initiatoren seien genannt: tert.-Butylperpivalat, 1,1-Di-tert.-butylperoxi-3,3,5-trimethylcyclohexan, tert.-Butylperoxiisopropylcarbonat, tert.-Butylperbenzoat, Dicumylperoxid, ferner können weniger bevorzugt tert.-Butylperacetat, 1,3-Di--tert.-butylperoxiisopropylbenzol, tert.-Butylcumylperoxid und Di-tert.-butylperoxid zur Anwendung gelangen. Besonders bevorzugt werden tert.-Butylperoxi-2-ethylhexanoat und Dibenzoylperoxid angewendet.

Der Starter wird, nach den dem Fachmann bekannten Bedingungen zweckmäßigerweise in den Reaktionsansatz, d.h. in den Vormischer, in dem der Reaktionsansatz homogenisiert wird, eingebracht.

Das Verfahrensprinzip des erfindungsgemäßen Verfahren kann Fig. 2 der DE-AS 17 70 392 entnommen werden. Es ist lediglich zweckmäßigerweise noch der der Kaskade vorgeschaltete Vormischer anzuwenden. Anzumerken ist noch, daß das Volumen des Vormischers sehr klein im Verhältnis zu den Volumina der Rührreaktoren $R_1$ und $R_2$ sein sollte. Das erfindungsgemäße Verfahren ist auch ohne diesen Vormischer durchführbar. Unabhängig davon ob der Vormischer verwendet oder nicht verwendet wird, müssen im ersten Rührkessel ($R_1$) die erfindungsgemäß einzustellenden Umsätze eingehalten werden.

Die nach dem erfindungsgemäßen Verfahren erhaltenen schlagfesten transluzenten vinylaromatischen Polymerisate eignen sich insbesondere zum Einsatz im Verpackungssektor. Als wichtigste Formteile kommen somit in Frage: Folien, im Verpackungssektor, insbesondere seien genannt Verpackungen für Molkereiprodukte, Eier, Spielwaren und Fotoapparate, sowie Trinkbecher für Automaten und Sortierkästen für Heimwerker. Für die Herstellung dieser Formteile können den erfindungsgemäßen Produkten die üblichen Zusatzstoffe, d.h. Farbstoffe, Antioxidantien, Stabilisatoren und eventuell Flammschutzmittel in üblichen Mengen zugesetzt werden.

BASF Aktiengesellschaft — 6 — 0113066

Die in den Beispielen und Vergleichsversuchen beschriebenen Parameter wurden wie folgt bestimmt:

1. Streckspannung in $N/mm^2$ nach DIN 53 455.

2. Oberflächenrauhigkeit in µm, gemessen mit Surfindicator der Fa. Brush Instruments, USA, am Faden der Schmelzindex-Messung.

3. Gelgehalt [25°C] in Methylethylketon/Aceton nach Abzentrifugieren des Unlöslichen, Dekantieren und Trocknen in Gew.% der Einwaage.

4. Die Bestimmung der Viskositätszahl des schlagfesten Polystyrols erfolgt analog DIN 53 726; dabei wurden 0,5 g Material in 100 ml Dimethylformamid gelöst.

5. Zur Prüfung der Zähigkeit wurden bei 250°C Prüfkörper gespritzt. Daran wurde die Kerbschlagzähigkeit nach DIN 53 453 bei 23°C gemessen.

6. Der mittlere Teilchendurchmesser der integralen Masseverteilung der Weichkomponente wurde durch Auswertung von Elmi-Aufnahmen bestimmt.

7. Zur Bewertung der Transluzenz der beim erfindungsgemäßen Verfahren erhaltenen Produkte wurde zunächst eine Skala erstellt. Diese Skala umfaßt die Werte 1 bis 9 in der folgenden Tabelle 1, wobei die niedrigeren Werte eine gute Transluzenz repräsentieren. Um die in der Tabelle 1 angeführten Werte zu erzielen, wurde ein handelsübliches schlagfestes Polystyrol (Produkt A), das 15 Gew.% eines Styrol-Butadien-Blockkautschuks mit Kapselteilchenmorphologie (Typ B 6533, früher SR 6533) mit 60 Gew.% Butadien enthielt, zugrundegelegt (Benotung 4). Abmischungen dieses Produktes A in den in der Tabelle 1 genannten Gewichtsverhältnissen mit Standardpolystyrol der VZ 96[ml/g] ergaben die Werte von 3 bis 1 für die Transluzenz. Durch Abmischung des genannten Standardpolystyrols mit einem schlagfesten Polystyrol mit Zellenteilchenmorphologie (Produkt B) Handelsprodukt (thermisch hergestellt), das 8 Gew.% Polybutadien enthält, wurden höhere Werte der Transluzenz erzielt; vgl. die Werte 5 bis 9 in der Tabelle.

Von Proben der erfindungsgemäßen Produkte der Beispiele und der Vergleichsversuche wurden Preßblättchen hergestellt und visuell mit den entsprechenden Preßblättchen der Standards der Skala verglichen. Dabei ergab sich, daß die erfindungsgemäßen Produkte Werte im Bereich von 4 bis 5 aufwiesen.

Tabelle 1

| Note für die Transluzenz | Abmischung in Gew.-Teilen | | |
|---|---|---|---|
| | Produkt A | Standard-polystyrol | Produkt B |
| 1 | 20 | 80 | 0 |
| 2 | 40 | 60 | 0 |
| 3 | 60 | 40 | 0 |
| 4 | 100 | 0 | 0 |
| 5 | 96 | 0 | 4 |
| 6 | 92 | 0 | 5 |
| 7 | 88 | 0 | 12 |
| 8 | 84 | 0 | 16 |
| 9 | 80 | 0 | 20 |

Zur Durchführung der Beispiele und Vergleichsversuche wurde als Kautschuk ein Polybutadien Typ Buna CB 529 C der Firma Bayer AG mit einem trans-1,4-Gehalt von 50 bis 60 %, einem cis-1,4-Gehalt zwischen 30 bis 40 % und einem 1,2-Vinylgehalt, der im Bereich von 5 bis 15 % lag, verwendet. Die Moneyviskosität ML - 4 mm/100°C betrug 59. Dem Reaktionsansatz wurde ein Antioxidans auf Basis eines sterisch gehinderten Phenols (Irganox[R] 1076) zugegeben, außerdem wurde diesem ein aromatenarmes, technisches Weißöl zugegeben.

Die Erfindung wird nachstehend anhand von Beispielen und Vergleichsversuchen näher erläutert. Die in den Beispielen und Vergleichsversuchen genannten Teile und Prozente beziehen sich, sofern nichts anderes angegeben ist, auf das Gewicht.

In allen Beispielen und Vergleichsversuchen wurde eine 2-Kessel-, 2-Turmkaskade mit einem Fassungsvermögen von 4,5, 10, 12 bzw. 12 1 Inhalt verwendet, die in der DE-AS 17 70 392 in Abbildung 2 dargestellt ist. Der Kessel mit 10 1 Inhalt war in allen Versuchen zu 60 % gefüllt, so daß zur Berechnung des Gesamtvolumens der Kaskade 6 1 eingesetzt wurden. Dem ersten Rührkessel wurde zusätzlich noch ein mit einem Rührer ausgestatteter Vormischer von 1 1 Inhalt vorgeschaltet. Das Gesamtvolumen der Kaskade beträgt somit 35,5 Liter.

## Beispiel 1

Ansatz: 86,62 kg Styrol; 5,00 kg Ethylbenzol; 6,34 kg Polybutadien;
1,84 kg Mineralöl; 0,12 kg Irganox 1076; 0,02 kg Acrylsäure; 0,06 kg Zinkstearat; 0,10 kg tert.-Butylperoxi-2-ethylhexanoat.

Durchsatz: 3,0 l/h

| | | |
|---|---|---|
| Vormischer: Rührerdrehzahl (UPM) | | 100 |
| Temperatur (°C) | | 70 |
| Umsatz (%) | | 2 |
| 1. Rührkessel: Rührerdrehzahl (UPM) | | 100 |
| Temperatur (°C) | | 85 |
| Umsatz (%) | | 13 |
| 2. Rührkessel: Rührerdrehzahl (UPM) | | 240 |
| Temperatur (°C) | | 83 |
| Umsatz (%) | | 24 |
| 1. Reaktionsturm: Rührerdrehzahl (UPM) | | 20 |
| Temperatur (°C) | | 90 |
| Umsatz (%) | | 50 |
| 2. Reaktionsturm: Rührerdrehzahl (UPM) | | 10 |
| Temperatur (°C) | | 129 |
| Umsatz (%) | | 78 |

Es wurde schlagfestes Polystyrol mit einem Transluzenz-Wert von 5 erhalten.

Vergleichsversuche 1a bis c

Ansatz wie Beispiel 1

|  | a) | b) | c) |
|---|---|---|---|
| Durchsatz (l/h): | 4,0 | 6,0 | 8,0 |
| Vormischer: Rührerdrehzahl (UPM) | 100 | 100 | 100 |
|          Temperatur (°C) | 91 | 97 | 95 |
|          Umsatz (%) | 2 | 2 | 2 |
| 1. Rührkessel: Rührerdrehzahl (UPM) | 100 | 100 | 100 |
|          Temperatur (°C) | 90 | 96 | 102 |
|          Umsatz (%) | 13 | 13 | 11 |
| 2. Rührkessel: Rührerdrehzahl (UPM) | 240 | 240 | 240 |
|          Temperatur (°C) | 100 | 98 | 106 |
|          Umsatz (%) | 25 | 23 | 22 |
| 1. Reaktionsturm: Rührerdrehzahl (UPM) | 20 | 20 | 20 |
|          Temperatur (°C) | 116 | 125 | 134 |
|          Umsatz (%) | 52 | 49 | 50 |
| 2. Reaktionsturm: Rührerdrehzahl (UPM) | 10 | 10 | 10 |
|          Temperatur (°C) | 140 | 151 | 165 |
|          Umsatz (%) | 78 | 80 | 79 |
| Transluzenz-Wert: | 7 | 9 | 9 |

Derselbe Effekt wird auch bei anderer Fahrweise erreicht (folgendes Beispiel).

Beispiel 2

Ansatz wie Beispiel 1, außer 0,15 statt 0,10 kg tert.-Butylperoxid-2--ethylhexanoat

|  | a) | b) |
|---|---|---|
| Durchsatz: l/h | 2,5 | 3,0 |
| Vormischer: Rührerdrehzahl (UPM) | 100 | 100 |
|          Temperatur (°C) | 69 | 10 |
|          Umsatz (%) | 2 | 2 |
| 1. Rührkessel: Rührerdrehzahl (UPM) | 100 | 100 |
|          Temperatur (°C) | 84 | 86 |
|          Umsatz (%) | 17 | 17 |
| 2. Rührkessel: Rührerdrehzahl (UPM) | 240 | 240 |
|          Temperatur (°C) | 70 | 79 |
|          Umsatz (%) | 23 | 24 |

| 1. Reaktionsturm: | Rührerdrehzahl (UPM) | 20 | 20 |
|---|---|---|---|
| | Temperatur (°C) | 80 | 89 |
| | Umsatz (%) | 50 | 51 |
| 2. Reaktionsturm: | Rührerdrehzahl (UPM) | 10 | 10 |
| | Temperatur (°C) | 112 | 117 |
| | Umsatz (%) | 79 | 78 |
| Transluzenz-Wert | | 4 | 5 |

Vergleichsversuch 2

Ansatz wie Beispiel 2

| Durchsatz (1/h): | | 4,0 |
|---|---|---|
| Vormischer: | Rührerdrehzahl (UPM) | 100 |
| | Temperatur (°C) | 68 |
| | Umsatz (%) | 2 |
| 1. Rührkessel: | Rührerdrehzahl (UPM) | 100 |
| | Temperatur (°C) | 95 |
| | Umsatz (%) | 17 |
| 2. Rührkessel: | Rührerdrehzahl (UPM) | 240 |
| | Temperatur (°C) | 81 |
| | Umsatz (%) | 23 |
| 1. Reaktionsturm: | Rührerdrehzahl (UPM) | 20 |
| | Temperatur (°C) | 99 |
| | Umsatz (%) | 51 |
| 2. Reaktionsturm: | Rührerdrehzahl (UPM) | 10 |
| | Temperatur (°C) | 139 |
| | Umsatz (%) | 78 |
| Transluzenz-Wert | | 7 |

An den Proben der in den Vergleichsversuchen und Beispielen erhaltenen Produkte wurden verschiedene Parameter in üblicher Weise bestimmt. In der folgenden Tabelle ist eine Übersicht der Eigenschaften der bei den Versuchen erhaltenen Produkte wiedergegeben. In diese Tabelle 2 sind die Durchsätze und die Transluzenzwerte mitaufgenommen worden. Aus der Tabelle 2 ist ersichtlich, daß Transluzenz und Durchsatz voneinander abhängen. Bei der gegebenen Versuchsanordnung, die auch für andere Kautschukgehalte gilt, werden die besten Transluzenzwerte für das Endprodukt erzielt, wenn der Durchsatz in dem beanspruchten Bereich gehalten wird.

Tabelle 2

Beispiele (B) und Vergleichsversuche (V)

| | B 1 | V 1 | | | B 2 | | V 2 |
|---|---|---|---|---|---|---|---|
| | | a | b | .c | a | b | |
| Streckspannung [N/mm$^2$] | 34,0 | 33,3 | 31,0 | 30,1 | 36,1 | 32,0 | 32,8 |
| Oberflächenrauhtiefe [µm] | 0,30 | 0,26 | 0,24 | 0,25 | 0,25 | 0,26 | 0,29 |
| Gelgehalt [%] | 25,3 | 23,6 | 23,1 | 22,0 | 26,5 | 25,8 | 24,0 |
| Viskositätszahl [ml/g] | 95,4 | 93,5 | 84,9 | 74,5 | 84,8 | 91,4 | 85,2 |
| Lochkerbschlagzähigkeit a Kl [kJ/m$^2$] | | | | | | | |
| Transluzenz | 5 | 7 | 9 | 9 | 4 | 5 | 7 |
| Durchsatz [%/Stunde] | 8,5 | 11,3 | 16,9 | 22,5 | 7,0 | 8,5 | 11,3 |

Patentansprüche

1. Verfahren zur Herstellung von schlagfesten Polymerisaten von Vinylaromaten durch kontinuierliche Polymerisation eines Reaktionsansatzes der 2 bis 12 Gew.%, bezogen auf den Ansatz, mindestens eines Polybutadiens als Kautschuk in mindestens einem vinylaromatischen Monomeren gelöst enthält, und der zusätzlich gegebenenfalls ein indifferentes Lösungsmittel, sowie gegebenenfalls mindestens ein Hilfsmittel aufweist, in einer Kaskade aus 2 Rührkesseln $R_1$ und $R_2$ und 2 Turmreaktoren $T_1$ und $T_2$, bei Temperaturen von 50 bis 160°C, wobei die Polymerisation in den beiden Rührkesseln $R_1$ und $R_2$ unter an sich bekannten Scherbedingungen innerhalb des genannten Temperaturbereiches isotherm durchgeführt wird, und die Polymerisation in den Turmreaktoren $T_1$ und $T_2$ jeweils isotherm oder mit ansteigendem Temperaturprofil bis zu Endumsätzen von 60 bis 90 Gew.%, in $T_2$, erfolgt, unter anschließender Abtrennung des Wertproduktes und unter üblicher Entfernung von nicht umgesetzten Monomeren und gegebenenfalls des Lösungsmittels, dadurch gekennzeichnet, daß man die Polymerisation in Gegenwart von an sich bekannten pfropfaktiven peroxidischen Initiatoren durchführt und Durchsätze von weniger als 9 %, bezogen auf das Gesamtvolumen der Kaskade/Stunde einstellt.

2. Verwendung der schlagfesten Polymerisate gemäß Anspruch 1 zur Herstellung von Formteilen.

3. Formteile aus schlagfesten Polymerisaten gemäß Anspruch 1.

0113066

Nummer der Anmeldung

EP 83 11 2136

## Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 054 141  (BASF) | | C 08 F 279/02 // (C 08 F 279/02 C 08 F 212/06 ) |
| A | EP-A-0 054 144  (BASF) | | |

RECHERCHIERTE SACHGEBIETE (Int. Cl. ³)

C 08 F

Der vorliegende Recherchenbericht wurde für alle Patentansprüche erstellt.

| Recherchenort | Abschlußdatum der Recherche | Prüfer |
|---|---|---|
| DEN HAAG | 20-03-1984 | MEULEMANS R.A.M.G.G. |